# EUROPÄISCHE PATENTSCHRIFT

(11) **EP 0 382 280 B1**
(45) Veröffentlichungstag und Bekanntmachung des Hinweises auf die Patenterteilung: **28.09.1994**
(21) Anmeldenummer: 90200198.1
(22) Anmeldetag: 29.01.1990
(51) Int. Cl.: G11B 21/02

(54) **Gerät zum Abtasten einer kreisscheibenförmigen Informationsträgerplatte**
Apparatus for scanning a disc-type information carrier
Appareil pour balayer une plaque de support pour information en forme de cercle

(30) Priorität: 03.02.1989 AT 223/89
(43) Veröffentlichungstag der Anmeldung: 16.08.1990
(73) Patentinhaber: Philips Electronics N.V., 5621 BA Eindhoven (NL)
(72) Erfinder: Heinrich, Norbert, NL-5656 AA Eindhoven (NL)
(74) Vertreter: Schrijnemaekers, Hubert Joannes Maria

(56) Entgegenhaltungen:
- EP-A- 0 270 684
- EP-A- 0 312 153
- PATENT ABSTRACTS OF JAPAN, unexamined applications, P Sektion, Band 9, Nr. 116, 21. Mai 1985 THE PATENT OFFICE JAPANESE GOVERNMENT, Seite 28 P 357
- PATENT ABSTRACTS OF JAPAN, unexamined applications, P Sektion, Band 9, Nr. 86, 16. April 1985 THE PATENT OFFICE JAPANESE GOVERNMENT, Seite 88 P 349

## Beschreibung

Die Erfindung bezieht sich auf ein Gerät zum Abtasten einer kreisscheibenförmigen Informationsträgerplatte mit einer zum Abtasten der Platte vorgesehenen, parallel zur Ebene der Platte in einer Radialrichtung der Platte geführten, hin und her verstellbaren Abtasteinrichtung, die zum Verstellen derselben mit einer parallel zur Ebene der Platte in der Radialrichtung verlaufenden Zahnstange verbunden ist, die von einem Motor her über ein Zahnradgetriebe antreibbar ist, das eine von dem Motor antreibbare Schnecke, deren Achse parallel zur Ebene der Platte verläuft, ein mit der Schnecke in Eingriff stehendes Schneckenrad und einen mit dem Schneckenrad koaxial verbundenen, mit der Zahnstange in Eingriff stehenden weiteren Getriebeteil aufweist. Ein solches Gerät ist bekannt und im Handel erhältlich.

Bei dem bekannten Gerät handelt es sich um einen sogenannten Compact Disc-Spieler, der eine optische Abtasteinrichtung zum Abtasten einer optisch abtastbaren Informationsträgerplatte aufweist, auf der Informationen in einer spiralförmig verlaufenden Spur gespeichert sind und die allgemein als Compact Disc bezeichnet wird. Bei einem solchen Gerät ist die Abtasteinrichtung in einer Radialrichtung der Informationsträgerplatte hin und her verstellbar, um die Abtasteinrichtung wahlweise zu jedem gewünschten Spurabschnitt der spiralförmig verlaufenden Spur auf der Platte verstellen zu können. Dabei besteht das Bestreben, eine möglichst feingängige Verstellung der Abtasteinrichtung zu erreichen, was bedeutet, daß pro Umdrehung des Motors die Abtasteinrichtung um einen möglichst kleinen Hub verstellt wird. Dies wird dann erreicht, wenn das Zahnradgetriebe zum Antreiben der Abtasteinrichtung eine möglichst große Untersetzung aufweist. Zugleich soll das Zahnradgetriebe auch einen möglichst geringen Raumbedarf in Anspruch nehmen, um die Abmessungen des Gerätes möglichst klein zu halten. Bei dem bekannten Gerät weist das Zahnradgetriebe als weiteren Getriebeteil ein Stirnzahnrad auf, mit dem aber nur eine relativ kleine Untersetzung erreichbar ist, was hinsichtlich einer möglichst feingängigen Verstellung der Abtasteinrichtung ungünstig ist. Um insgesamt eine möglichst große Untersetzung des Zahnradgetriebes zu erzielen, muß daher das Schneckenrad einen relativ großen Durchmesser aufweisen, um eine für eine große Untersetzung ausreichend große Anzahl Zähne unterbringen zu können, was aber im Hinblick auf einen möglichst geringen Raumbedarf für das Zahnradgetriebe insgesamt ungünstig ist.

Die Erfindung hat sich zur Aufgabe gestellt, die vorstehend angeführten Schwierigkeiten zu vermeiden und bei einem Gerät der eingangs angeführten Gattung ein Zahnradgetriebe mit einer insgesamt möglichst großen Untersetzung bei einer möglichst kompakten Ausbildung desselben zu erhalten. Hierfür ist die Erfindung dadurch gekennzeichnet, daß die Achse des Schneckenrades im wesentlichen in einer senkrecht zur Ebene der Platte und in der Radialrichtung verlaufenden Ebene gegenüber der Ebene der Platte geneigt verläuft und daß der mit dem Schneckenrad koaxial verbundene weitere Getriebeteil durch einen zum Schneckenrad koaxialen, eine kegelförmige Mantelfläche aufweisenden Trägerteil und mindestens eine an dessen kegelförmiger Mantelfläche vorgesehene, gemäß einer Spirale verlaufende, im Querschnitt der Flankengeometrie der Zahnstange entsprechende Leiste gebildet ist, mit der die Zahnstange antreibbar ist. Mit der auf dem Trägerteil vorgesehenen, gemäß einer Spirale verlaufenden Leiste ist eine besonders große Untersetzung erreichbar, was im Hinblick auf die Erzielung einer möglichst feingängigen Verstellung der Abtasteinrichtung vorteilhaft ist. Aufgrund der mit der spiralförmig verlaufenden Leiste erzielten besonders großen Untersetzung kann das Schneckenrad einen relativ kleinen Durchmesser aufweisen, was zwar eine relativ kleine Untersetzung desselben zur Folge hat, wobei aber zufolge der mit der spiralförmig verlaufenden Leiste erzielten besonders großen Untersetzung eine insgesamt relativ große Untersetzung des Zahnradgetriebes erreicht wird, so daß eine feingängige Verstellung der Abtasteinrichtung gewährleistet ist. Zufolge der relativ kleinen Ausbildung des Schneckenrades wird vorteilhafterweise ein Zahnradgetriebe erhalten, das nur einen kleinen Raumbedarf in Anspruch nimmt, was hinsichtlich einer möglichst kompakten Geräteausbildung von Vorteil ist.

An dieser Stelle sei erwähnt, daß beispielsweise aus dem IBM Technical Disclosure Bulletin, Vol.22, Nr.9, Feb. 1980, Seite 4152 oder aus dem Dokument JP-A-60-1680 an sich ein Gerät bekannt ist, das zur Verstellung einer magnetischen Abtasteinrichtung für eine magnetisch abtastbare kreisscheibenförmige Informationsträgerplatte in einer Radialrichtung der Platte eine parallel zur Platte angeordnete, von einem Motor antreibbare Scheibe aufweist, in der eine spiralförmige Nut vorgesehen ist, in die ein mit der Abtasteinrichtung verbundener Nutenfolger ragt. Um bei diesem Gerät einen vorgegebenen Gesamthub für die Abtasteinrichtung zu erreichen, muß die spiralförmige Nut einen diesem Gesamthub entsprechenden Verlauf aufweisen, was zur Folge hat, daß die Scheibe einen zur Realisierung dieses Verlaufes erforderlichen großen Durchmesser aufweisen muß. Bei diesem Gerät ist aber kein Zahnradgetriebe zum Verstellen der Abtasteinrichtung vorgesehen, wie dies beim erfindungsgemäßen Gerät der Fall ist, und es ist aufgrund der erforderlichen großen Abmessung der Scheibe auch nicht möglich, eine relativ kompakte Geräteausbildung wie beim erfindungsgemäßen Gerät zu erreichen.

Beim erfindungsgemäßen Gerät kann die mit der gemäß einer Spirale verlaufenden Leiste antreibbare Zahnstange senkrecht zur Ebene der Platte gesehen bezüglich der Achse des Schneckenrades versetzt angeordnet sein, wobei dann die Zahnstange schräg verzahnt ausgebildet sein muß. Als vorteilhaft hat sich aber erwiesen, wenn senkrecht zur Ebene der Platte gesehen die Zahnstange bezüglich der Achse des Schneckenrades im wesentlichen mittig angeordnet ist. Auf diese Weise ist erreicht, daß die Zahnstange einfach gerade verzahnt ausgebildet ist.

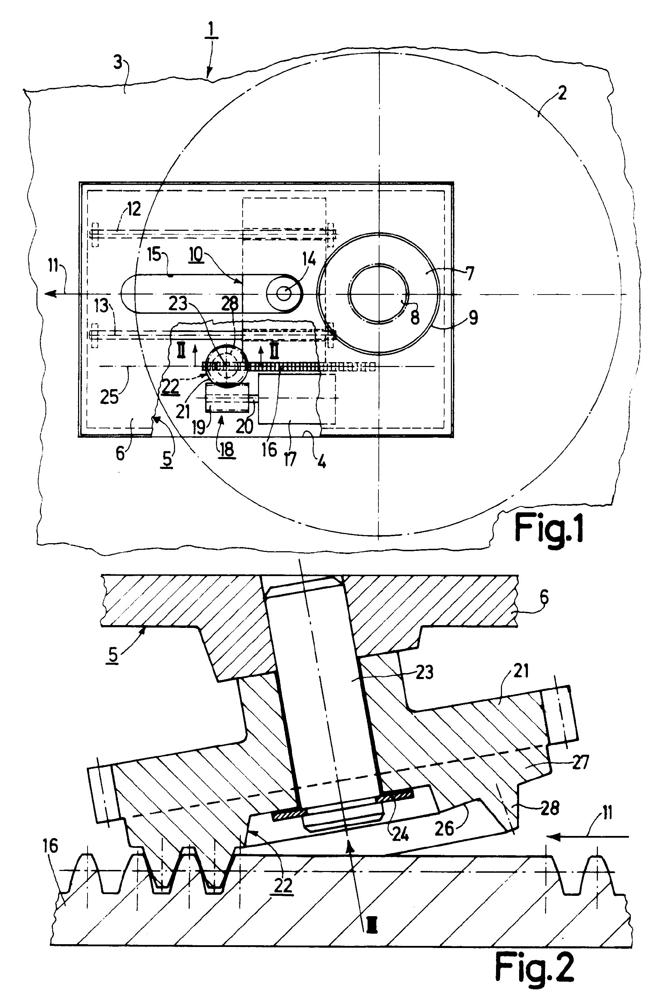

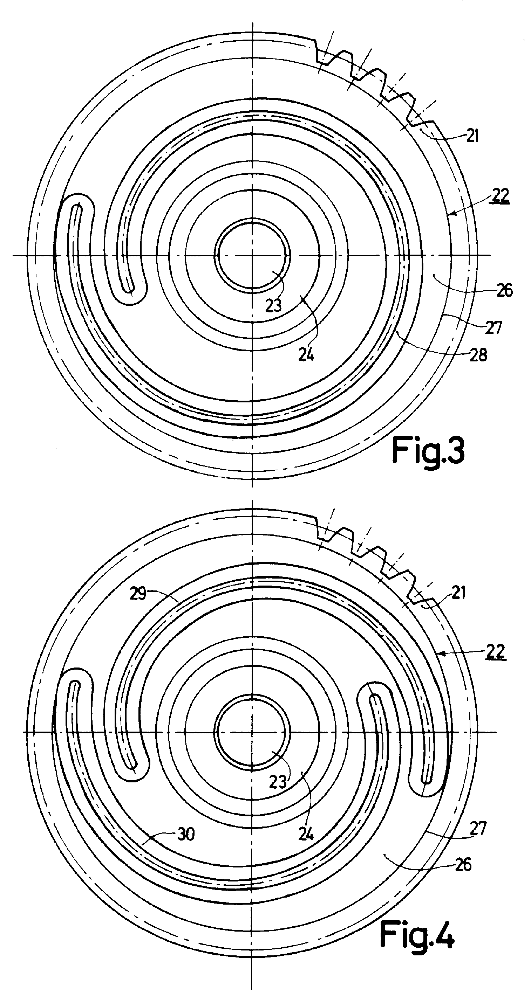

Die Erfindung wird im folgenden anhand von zwei in den Zeichnungen dargestellten Ausführungsbeispielen, auf die sie jedoch nicht beschränkt sein soll, näher beschrieben. Die Fig. 1 zeigt in Draufsicht in natürlicher Größe die erfindungswesentlichen Teile eines zum optischen Abtasten einer optisch abtastbaren Informationsträgerplatte ausgebildeten Gerätes gemäß einem ersten Ausführungsbeispiel, dessen Abtasteinrichtung mit einer Zahnstange verbunden ist, die über ein Zahnradgetriebe antreibbar ist, von dem der Getriebeteil zum Antreiben der Zahnstange eine spiralförmig verlaufende Leiste aufweist, mit der die Zahnstange antreibbar ist. Die Fig. 2 zeigt in einem Schnitt längs der Linie II-II in Fig.1 in einem gegenüber der Fig. 1 zehnfach größeren Maßstab den die spiralförmig verlaufende Leiste aufweisenden Getriebeteil und die von diesem antreibbare Zahnstange. Die Fig.3 zeigt in einer Ansicht gemäß dem Pfeil III in Fig.2 den eine spiralförmig verlaufende Leiste aufweisenden Getriebeteil. Die Fig.4 zeigt in analoger Weise wie die Fig.3 einen Getriebeteil eines Gerätes gemäß einem zweiten Ausführungsbeispiel, der zum Antreiben einer Zahnstange zwei spiralförmig verlaufende Leisten aufweist.

Die Fig.1 zeigt der Einfachheit halber nur die im Zusammenhang mit der vorliegenden Erfindung wesentlichen Teile eines Gerätes 1 zum Abtasten einer kreisscheibenförmigen Informationsträgerplatte 2, die in Fig.1 schematisch mit einer strichpunktierten Linie angedeutet ist und bei der es sich um eine auf optische Weise abtastbare Informationsträgerplatte handelt, die allgemein als Compact Disc bekannt ist. Das Gerät 1 weist eine plattenförmige Gehäusewand 3 auf, in der ein rechteckförmiger Durchbruch 4 vorgesehen ist. In den Durchbruch 4 ist ein wannenförmiges Chassis 5 eingesetzt, wobei die Deckenwand 6 des Chassis 5 mit der Gehäusewand 3 im wesentlichen in einer Ebene liegt. An dem Chassis 5 ist ein von einem nicht dargestellten Motor rotierend antreibbarer Plattenteller 7 drehbar gelagert, der einen Zentrierkonus 8 für die Platte 2 aufweist und der durch einen kreisförmigen Durchbruch 9 in der Deckenwand 6 des Chassis 5 hindurchragt. Nach dem Auflegen der Platte 2 auf den Plattenteller 7, wie dies Fig.1 zeigt, ist die Platte 2 rotierend antreibbar. Auf der Platte 2 ist eine spiralförmig verlaufende Spur vorgesehen, in der Informationen, wie beispielsweise Musikstücke, gespeichert sind, die während des rotierenden Antreibens der Platte 2 aus der Spur auslesbar sind.

Zum Abtasten der Informationsträgerplatte 2, um die in der spiralförmig verlaufenden Spur gespeicherten Informationen von der Platte auszulesen, weist das Gerät 1 eine optische Abtasteinrichtung 10 auf. Die Abtasteinrichtung 10 ist parallel zur Ebene der Platte 2 in einer Radialrichtung der Platte 2, die in Fig.1 mit einem Pfeil 11 angegeben ist, hin und her verstellbar. Dabei ist die Abtasteinrichtung 10 mit zwei am Chassis 5 befestigten Führungsstangen 12 und 13, auf die die Abtasteinrichtung 10 aufgeschoben ist, verstellbar geführt. Die Abtasteinrichtung 10 weist eine Linse 14 auf, mit der durch einen in der Deckenwand 6 des Chassis 5 vorgesehenen, in der Radialrichtung 11 verlaufenden Schlitz 15 hindurch ein mit einem Strahlerzeugungssystem in der Abtasteinrichtung 10 erzeugter Lichtstrahl auf die Spur auf der Platte 2 fokussierbar ist, der von der Spur reflektiert und dabei entsprechend den darin gespeicherten Informationen moduliert wird. Der reflektierte Lichtstrahl wird wieder über die Linse 14 einem photoelektrischen Detektorsystem in der Abtasteinrichtung 10 zugeführt, mit dessen Hilfe aus dem modulierten Lichtstrahl elektrische Informationssignale entsprechend den gespeicherten und abgetasteten Informationen gewonnen werden, die dann zum wahrnehmbaren Wiedergeben der gespeicherten Informationen weiter verarbeitet werden.

Zum hin- und hergehenden Verstellen der Abtasteinrichtung 10 in der Radialrichtung 11, um die Abtasteinrichtung 10 und damit deren Linse 14 zu jedem gewünschten Spurabschnitt der spiralförmig verlaufenden Spur auf der Platte 2 verstellen zu können, ist die Abtasteinrichtung 10 mit einer parallel zur Ebene der Platte 2 in der Radialrichtung 11 verlaufenden Zahnstange 16 verbunden, deren Zähne in Richtung zur Platte 2 hin von derselben abstehen. Die Zahnstange 16 ist von einem reversierbaren Motor 17 her über ein Zahnradgetriebe 18 hin- und hergehend antreibbar. Das Zahnradgetriebe 18 weist eine vom Motor 17 antreibbare Schnecke 19 auf, die auf die Motorwelle 20 drehfest aufgesetzt ist. Der Motor 17 und die Schnecke 19 sind dabei so angeordnet, daß die Achse der Schnecke 19 parallel zur Ebene der Platte 2 verläuft. Weiters weist das Zahnradgetriebe 18 ein mit der Schnecke 19 in Eingriff stehendes Schneckenrad 21 und einen mit dem Schneckenrad 21 koaxial verbundenen, mit der Zahnstange 16 in Eingriff stehenden weiteren Getriebeteil 22 auf. Das Schneckenrad 21 und der hiezu koaxiale weitere Getriebeteil 22 sind um eine Achse 23 drehbar.

Wie aus Fig.2 ersichtlich ist, verläuft bei vorliegendem Gerät gemäß Fig.1 nunmehr die Achse 23 des Schneckenrades 21, die in die Deckenwand 6 des Chassis 5 drehfest eingesetzt ist und auf der das Schneckenrad 21 mit Hilfe eines Sicherungsringes 24 gehalten ist, in einer senkrecht zur Ebene der Platte 2 und in der Radialrichtung 11 verlaufenden Ebene, die gemäß Fig.2 parallel zur Zeichnungsebene verläuft und in Fig.1 mit einer strichpunktierten Linie 25 angegeben ist, gegenüber der Ebene der Platte 2, die parallel zur Deckenwand 6 verläuft, geneigt. Aus Fig.2 ist weiters ersichtlich, daß der mit dem Schneckenrad 21 koaxial verbundene weitere Getriebeteil 22 durch einen zum Schneckenrad 21 koaxialen, eine kegelförmige Mantelfläche 26 aufweisenden Trägerteil 27 und eine an dessen kegelförmiger Mantelfläche 26 vorgesehene, gemäß einer Spirale verlaufende, im Querschnitt der Flankengeometrie der Zahnstange 16 entsprechende Leiste 28 gebildet ist, mit der die Zahnstange 16 antreibbar ist. Wie aus Fig.1 ersichtlich ist, ist senkrecht zur Ebene der Informationsträgerplatte 2 gesehen die Zahnstange 16 bezüglich der Achse 23 des Schneckenrades 21 mittig angeordnet, wobei infolge dieser Anordnung die Zahnstange 16 einfach gerade verzahnt ausgebildet ist.

Der Trägerteil 27 ist bei vorliegendem Gerät einfach als seitlicher Ansatz des Schneckenrades 21 ausgebildet, wobei das Schneckenrad und der Ansatz einstückig ausgebildet sind. Der Trägerteil 27 könnte aber auch als separater Teil ausgebildet sein, der mit separaten Mitteln mit dem Schneckenrad koaxial verbunden ist. Wie aus Fig.2 ersichtlich, ist die Neigung der Achse 23 so gewählt, daß die kegelförmige Mantelfläche 26 im Bereich des Eingriffes der Leiste 28 in die Zahnstange 16 parallel zur Zahnstange 16 verläuft. Die Leiste 28 verläuft bei vorliegendem Gerät gemäß einer archimedischen Spirale, was zur Folge hat, daß mit derselben der Zahnstange 16 eine gleichförmige Bewegung erteilt wird. Die Leiste könnte aber auch gemäß einer Spirale einer anderen Art, beispielsweise gemäß einer galileischen Spirale, verlaufen. Die Leiste 28 entspricht wie erwähnt in ihrem Querschnitt der Flankengeometrie der Zahnstange 16, wobei bei vorliegendem Gerät die Leiste im Querschnitt das sogenannte Grundprofil der Verzahnung der Zahnstange 16 aufweist. Da dieses Grundprofil trapezförmig ist, weisen daher die seitlichen Flanken der Leiste 28 einen geradlinigen Verlauf auf. Die seitlichen Flanken einer Leiste könnten aber auch einer evolventenförmigen Verlauf aufweisen, wobei dann der Querschnitt dieser Leiste mit dem Querschnitt der Zähne der Zahnstange übereinstimmt.

Mit Hilfe der gemäß einer Spirale verlaufenden Leiste wird eine besonders große Untersetzung erreicht, weil pro Umdrehung des Schneckenrades und damit der Leiste die Zahnstange nur um einen einzigen Zahnabstand verstellt wird. Dies ist im Hinblick auf eine feingängige Verstellung der Zahnstange und folglich der Abtasteinrichtung von Vorteil. Aufgrund der mit der spiralförmig verlaufenden Leiste erzielten besonders großen Untersetzung kann das Schneckenrad einen relativ kleinen Durchmesser aufweisen, was zwar eine relativ kleine Untersetzung desselben zur Folge hat, wobei aber zufolge der mit der spiralförmig verlaufenden Leiste erzielten besonders großen Untersetzung eine insgesamt relativ große Untersetzung des Zahnradgetriebes erreicht wird, so daß eine feingängige Verstellung der Abtasteinrichtung gewährleistet ist. Zufolge der Ausbildung des Schneckenrades mit einem relativ kleinen Durchmesser ist vorteilhafterweise ein Zahnradgetriebe realisiert, das nur einen kleinen Raumbedarf in Anspruch nimmt, was hinsichtlich einer möglichst kompakten Ausbildung von Vorteil ist.

Bei dem vorstehend beschriebenen Ausführungsbeispiel weist der weitere Getriebeteil 22 eine einzige gemäß einer archimedischen Spirale verlaufende Leiste 28 auf. Gemäß dem Ausführungsbeispiel nach Fig.4 sind an der kegelförmigen Mantelfläche 26 des weiteren Getriebeteiles 22 zwei je gemäß einer archimedischen Spirale verlaufende Leisten 29 und 30 vorgesehen, die aufeinanderfolgend mit der von ihnen antreibbaren Zahnstange in Eingriff kommen. Mit diesem weiteren Getriebeteil wird bei einer Umdrehung desselben die Zahnstange um zwei Zahnabstände verstellt. An dem weiteren Getriebeteil können aber auch mehr als zwei gemäß einer Spirale verlaufende, aufeinanderfolgend mit der Zahnstange in Eingriff kommende Leisten vorgesehen sein, wobei die Anzahl der Leisten die Anzahl der Zahnabstände bestimmt, um die die Zahnstange pro Umdrehung des weiteren Getriebeteiles verstellt wird. Wie ersichtlich, kann auf diese Weise, nämlich durch die Wahl der Anzahl von spiralförmig verlaufenden Leisten des weiteren Getriebeteiles, der pro Umdrehung des weiteren Getriebeteiles erzielbare Hub für die Zahnstange einfach an erwünschte Anforderungen hinsichtlich der feingängigen Verstellung einer Abtasteinrichtung angepaßt werden.

## Patentansprüche

1. Gerät (1) zum Abtasten einer kreisscheibenförmigen Informationsträgerplatte (2) mit einer zum Abtasten der Platte vorgesehenen, parallel zur Ebene der Platte in einer Radialrichtung (11) der Platte geführten, hin und her verstellbaren Abtasteinrichtung (10), die zum Verstellen derselben mit einer parallel zur Ebene der Platte in der Radialrichtung verlaufenden Zahnstange (16) verbunden ist, die von einem Motor (17) her über ein Zahnradgetriebe (18) antreibbar ist, das eine von dem Motor antreibbare Schnecke (19), deren Achse (23) parallel zur Ebene der Platte verläuft, ein mit der Schnecke in Eingriff stehendes Schneckenrad (21) und einen mit dem Schneckenrad koaxial verbundenen, mit der Zahnstange in Eingriff stehenden weiteren Getriebeteil (22) aufweist, dadurch gekennzeichnet, daß die Achse des Schneckenrades im wesentlichen in einer senkrecht zur Ebene der Platte und in der Radialrichtung verlaufenden Ebene gegenüber der Ebene der Platte geneigt verläuft und daß der mit dem Schneckenrad koaxial verbundene weitere Getriebeteil durch einen zum Schneckenrad koaxialen, eine kegelförmige Mantelfläche (26) aufweisenden Trägerteil (27) und mindestens eine an dessen kegelförmiger Mantelfläche vorgesehene, gemäß einer Spirale verlaufende, im Querschnitt der Flankengeometrie der Zahnstange entsprechende Leiste (28) gebildet ist, mit der die Zahnstange antreibbar ist.

2. Gerät nach Anspruch 1, dadurch gekennzeichnet, daß senkrecht zur Ebene der Platte gesehen die Zahnstange bezüglich der Achse des Schneckenrades im wesentlichen mittig angeordnet ist.

3. Gerät nach Anspruch 1 oder 2, dadurch gekennzeichnet, dass die Leiste gemäss einer archimedischen Spirale verläuft.

## Claims

1. An apparatus (1) for scanning a circular information carrier disc (2), comprising a scanning device (10) adapted to scan the disc, which scanning device is guided parallel to the plane of the disc in a radial direction (11) of the disc, is movable to and fro and, in order to be moved, is connected a gear rack (16) which extends parallel to the plane of the disc in the radial direction and is drivable by a motor (17) *via* a gear mechanism, which mechanism comprises a worm (19) which is drivable by the motor and whose shaft (23) extends parallel to the plane of the disc, a worm wheel (21) which is in mesh with the worm, and a further drive member (22) which is coaxially connected to the worm wheel and which is in mesh with the gear rack, characterised in that, in a plane extending substantially perpendicularly to the plane of the disc and in the radial direction, the shaft of the worm wheel is inclined relative to the plane of the disc, and in that the further drive member, which is coaxially connected to the worm wheel, is constituted by a supporting member (27) which is coaxial with the worm wheel and has a conical surface (26) and at least one spiral ridge whose cross-sectional shape corresponds to the flank geometry of the gear rack and by which the gear rack is drivable.

2. An apparatus as claimed in Claim 1, characterised in that, viewed perpendicularly to the plane of the disc, the gear rack is substantially centred relative to the shaft of the gear wheel.

3. An apparatus as claimed in Claim 1 or 2, characterized in that the ridge takes the form of an Archimedean spiral.

## Revendications

1. Appareil (1) pour balayer une plaque de support d'information en forme de disque (2) muni d'un dispositif de balayage (10) animé d'un mouvement de va-et-vient, prévu pour le balayage de la plaque et guidé parallèlement au plan de la plaque dans une direction radiale (11) de la plaque, dispositif de balayage qui, pour son déplacement, est relié à une crémaillère (16) s'étendant parallèlement au plan de la plaque dans la direction radiale et pouvant être entraîné à partir d'un moteur (17) par l'intermédiaire d'une transmission par engrenages (18), qui présente une vis sans fin (19) qui peut être entraînée par le moteur et dont l'axe (23) s'étend parallèlement au plan de la plaque, une roue à denture hélicoïdale (21) en prise avec la vis sans fin et une pièce de transmission (22) qui est reliée coaxialement à la roue à denture hélicoïdale et qui est en prise avec la crémaillère, caractérisé en ce que l'axe de la roue à denture hélicoïdale s'étend essentiellement dans un plan perpendiculaire au plan de la plaque dans la direction radiale de façon inclinée par rapport au plan de la plaque et que l'autre pièce de transmission reliée coaxialement à la roue à denture hélicoïdale est constituée par une pièce porteuse (27) présentant une surface latérale conique (26) et coaxiale par rapport à la roue à denture hélicoïdale et au moins une nervure (28) qui est prévue à la surface latérale conique de la pièce porteuse (27) et qui s'étend selon une spirale, nervure dont la section correspond à la géométrie des flancs de la crémaillère et avec laquelle la crémaillère peut être entraînée.

2. Appareil selon la revendication 1, caractérisé en ce que, vue perpendiculairement au plan de la plaque, la crémaillère est disposée d'une façon essentiellement centrale par rapport à l'axe de la roue à denture hélicoïdale.

3. Appareil selon la revendication 1 ou 2, caractérisé en ce que la nervure s'étend selon une spirale d'archimède.
